# EUROPEAN PATENT SPECIFICATION

(11) **EP 0 232 978 B1**
(45) Date of publication and mention of the grant of the patent: **22.09.1993**
(21) Application number: 87300230.7
(22) Date of filing: 12.01.1987
(51) Int. Cl.: F16C 33/66

(54) **Liquid self-lubricating bearing system**
Flüssigkeitsgeschmierte und selbstschmierende Lageranordnung
Dispositif de paliers autolubrifiant par fluide

(30) Priority: 13.01.1986 US 818503
(43) Date of publication of application: 19.08.1987
(73) Proprietor: Hy-Tech Hydraulics, Inc., Houston Texas 77070 (US)
(72) Inventor: Major, Kenneth E., Houston, Texas 77070 (US); Braunagel, David K., Houston, Texas 77037 (US); Baker, John L., No. 3501 Cypress Texas 77429 (US)
(74) Representative: Wasmeier, Alfons, Dipl.-Ing.

(56) References cited:
- BE-A- 631 886
- DE-B- 1 139 705
- DE-C- 579 061
- DE-C- 836 131
- FR-E- 328
- GB-A- 2 084 652
- US-A- 2 950 943

## Description

This invention relates to a liquid self-lubricating bearing system according to the introductory part of claim 1.

Shaft-support, non-friction bearings are characterized by an inner race, which rotates with the shaft, an outer race, which is stationary, and non-friction bearings, which rotate between the races.

When such a bearing is used in a dirty and corrosive environment, the lubricant is typically grease. For example, a bearing supporting the arbor shaft of a water-cooled, concrete cutting saw uses a single lip seal which allows grease, moisture, and accumulated dirt to be flushed from the bearing. Such a bearing normally overheats in operation and when it cools, debris and moisture around the seals are drawn into the bearing causing corrosion and mechanical damage.

There has been a long-felt need for self-lubricating and self-cleansing, non-friction support bearing systems that are neither complicated to use, nor expensive to install, and that can easily replace bearings within existings machines.

Known oil lubrication systems are inadequate for such non-friction bearings that support horizontal shafts, and they are even worse for such bearings which support vertical shafts.

At low-to-medium shaft speeds, turbulence in the oil keeps the rotating bearings covered with a film of oil, but at higher speeds centrifugal forces tend to remove this oil film leaving damaging metal-to-metal contact.

Known is an oil mist lubricating system which utilizes a source of regulated compressed air, on oil reservoir, a mist generator, a mist-to-oil condenser, a nozzle to force the condensed oil jet into the bearing, and a pump for returning the oil from the bearing back to the oil reservoir. Obviously, such a mist system is bulky, impractical and too expensive for use with most portable machines such as concrete saws and the like.

A mist system which does not require a source of compressed air is described in US-A-2 950 943. It uses an oil reservoir situated below a slinger arm that is coupled to the rotatable shaft. The slinger splashes oil and creates a mist some of which is intended to reach the rotating bearing surfaces. This mist process provides irregular and non-uniform lubrication and, even at best, it does not sufficiently lubricate nor cleanse the wear products from the bearings.

A generic oil supply and scavenge system is shown in DE-C-836 131 and its counterpart US-A-2 604 188. The system shown there includes a bearing housing supporting two anti-friction bearings supporting a shaft. The shaft carries a spinning disc which scavenges the oil that has passed through the bearings. The oil is hence thrown outwardly by the centrifugal pumping action to an annular space, whence it travels through a pipe and a non-return valve to an oil storage tank. Unlike the present invention, an external compressor is used to force oil from the tank to the bearings. The tank according to this known system has an outlet feeding oil under static pressure through inlet pipes and jets into the inlets to bearings. A positive pressure differential will be established across each seal, which is required in order to overcome the pressure losses in the return path, and make each seal to leak a film of oil at the interface between seal and shaft. The specification of this Patent also states "... the static air pressure supply may be dispensed with .." (column 4, 10 - 13 of US-A-2 604 188). If the static air pressure were dispensed with from the tank, then the airspace above oil in the tank would drop to a pressure near atmospheric pressure. Because of that a little or no oil film will leak through each seal and each seal will reapidly deteriorate due to friction between it and its adjacent portion of the rotating shaft passing therethrough.

It is an object of this invention to improve a bearing system of the type according to the introductory part of claim 1 in such a manner that an oil film will always leak through each seal and its adjacent portion of the rotating shaft passing therethrough.

The subject invention is defined by the features of the characterising part of claim 1. Further embodiments of the invention are the subject of the subclaims.

According to this invention a positive pressure differential across each seal is obtained to make each seal to leak a film of oil and the interface between the seal and the shaft, ensuring a long-lasting operational life for the seal. Because the pressure at the inlet to each bearing is always positive, which means higher than atmospheric pressure, an oil film will always leak through each film, and this oil film will reduce friction between each seal and its adjacent portion of the rotating shaft passing therethrough.

The specific embodiments of the invention will be described by way of example only in connection with the accompanying drawings, wherein:
FIG. 1 is a sectional longitudinal view taken on line 1-1 on FIG. 2 of the novel lubricating system for a uni-directional shaft supported by a pair of non-friction bearings and including an oil reservoir in the bearing casing;
FIG. 2 is a sectional elevational view taken on line 2-2 of FIG. 1;
FIG. 3 is a sectional view of the bearing casing taken on line 3-3 of FIG. 4;
FIGS. 4 and 5 are sectional views taken on lines 4-4 and 5-5 of FIG. 3, respectively;
FIG. 6 is a front elevational view of one embodiment of the lubricant pumper element which is mounted on the shaft of the lubricating system of FIGS. 1-2;
FIG. 7 is a sectional view taken on line 7-7 of FIG. 6;
FIG. 8 is an enlarged view of the region near the discharge outlet from the eccentric expander channel operatively associated with the pumper element of FIG. 6;
FIG. 9 is a front elevational view of another embodiment of the pumper element;
FIG. 10 is a sectional view taken on line 10-10 of FIG. 9;
FIG. 11 is a front elevational view of yet another pumper element embodiment;
FIG. 12 is a sectional view taken on line 12-12 of FIG. 11;
FIG. 13 is an elevational sectional view of another embodiment of the lubricating system of FIGS. 1- 2 but for a bi-directional shaft;
FIG. 14 is an elevational sectional view similar to FIG. 13 but wherein the oil reservoir is situated above the bearings;
FIG. 15 is a sectional longitudinal view taken on line 15-15 of FIG. 14;
FIG. 16 is an elevational sectional view similar to FIG. 14 but wherein the oil reservoir is situated below the bearings;
FIG. 17 is a sectional elevational view of another embodiment of the lubricating system of FIGS. 1-2 but for a vertical shaft;
FIG. 18 is a perspective view of the novel lubricating bearing system of FIG. 14 used with a concrete saw; and
FIG. 19 is an exploded view of the arbor shaft assembly in the concrete saw of FIG. 18.

In the drawings, similar or symmetrical parts will sometimes be designated with the same reference characters followed by a prime (') and such parts will not be repetitively described.

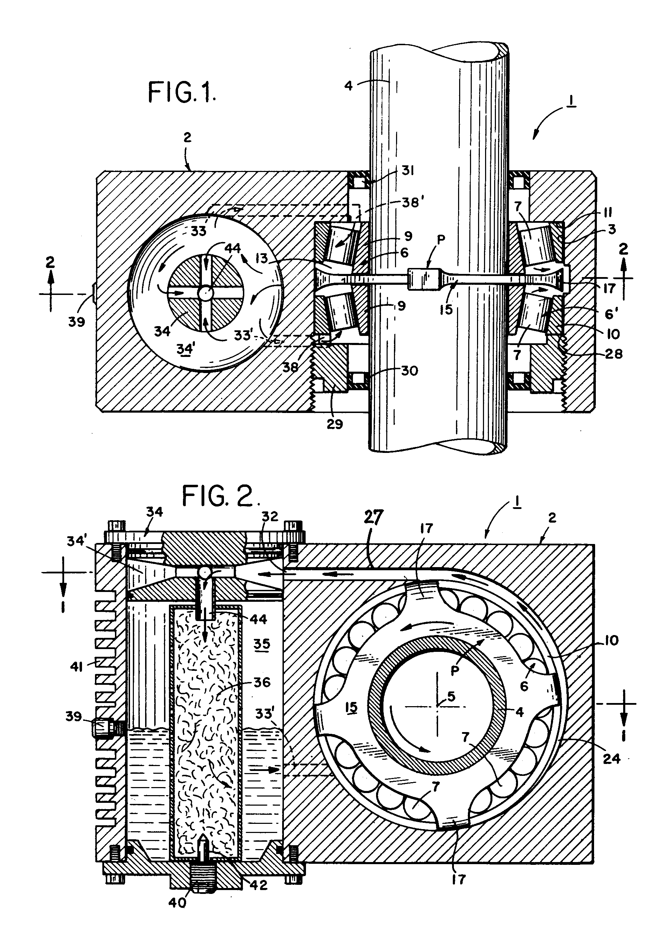

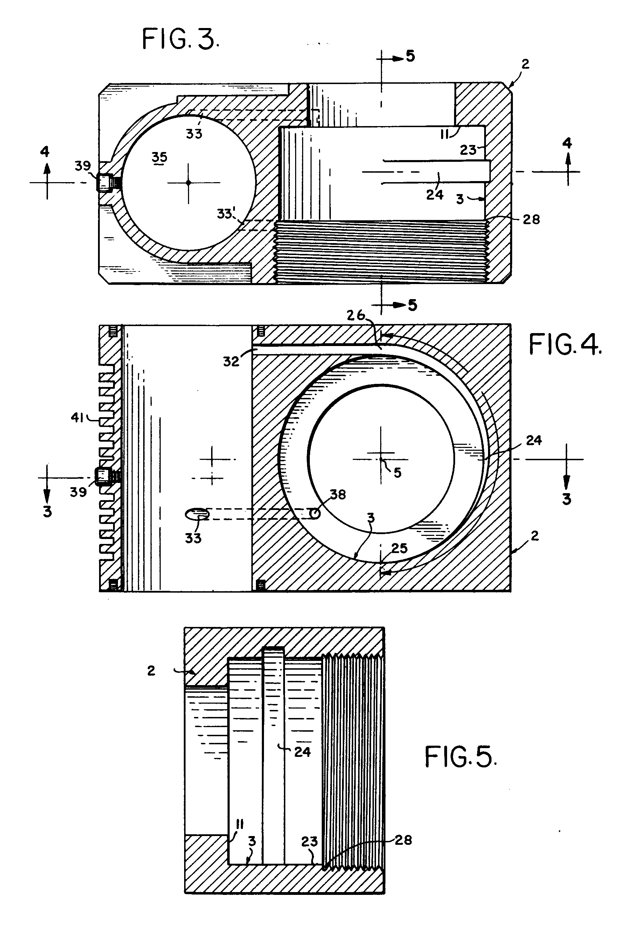

One embodiment of the self-lubricating bearing system of this invention, generally designated as 1 (FIGS.1-5), is entirely enclosed in a unitary casing 2 having a main bore 3 and a longitudinal axis 5 (Figs. 2 and 4).

Bore 3 houses a horizontal sleeve shaft 4 whose axis of rotation is coaxial with the bore's main axis 5 (FIGS. 1-2). Shaft 4 is supported for rotation by a pair of suitable bearings 6,6' mounted back-to-back. While two bearings are illustrated, only one such bearing can be used. Each bearing 6 or 6' has suitable bearing elements 7 that rotate between an inner race 9 secured to shaft 4 and a stationary outer race 10 that abuts against a shoulder 11 in bore 3. Bearing elements 7 can be tapered or cylindrical rollers, balls, etc.

Between bearings 6,6' within bore 3 is formed an annular well 13 which, in use, accumulates at its bottom a liquid lubricant typically oil of the type that can maintain metal wear particles in suspension.

A circular pumper element, generally designated as P, is concentrically mounted within well 13 on shaft 4 between bearings 6,6'. Pumper element P can have different configurations for different lubrication requirements of bearings 6,6'.

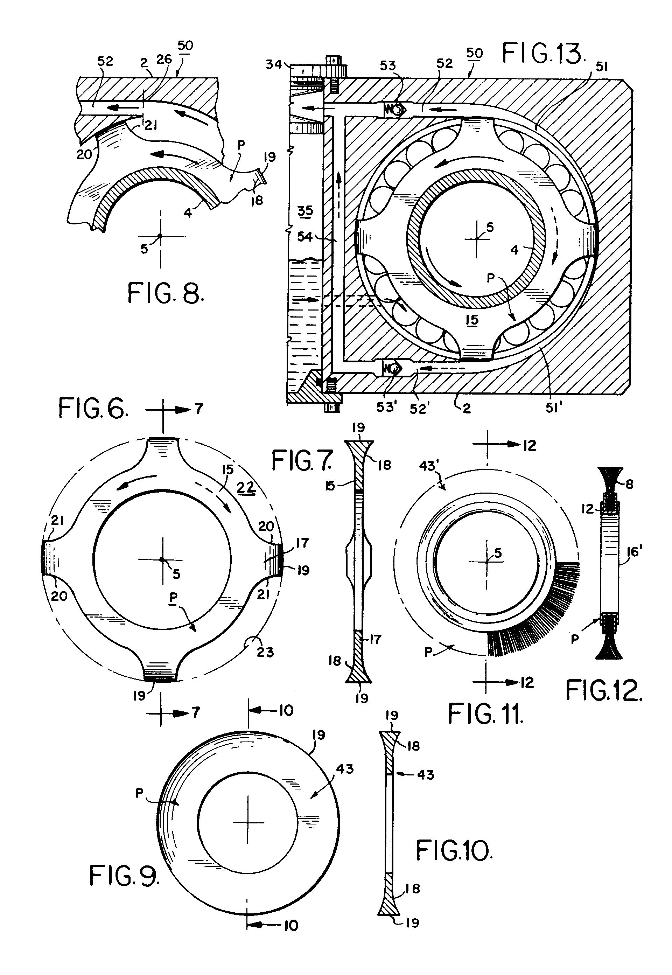

In system 1, pumper element P is a vane-type disc concentrically mounted on shaft 4 and having an outer diameter which corresponds to the diameter of outer race 10. Pumper element P includes an annular hub 15 (FIGS. 6-8) and four radial vanes generally designated as 17.

The number and shape of vanes 17 will depend mostly on the speed and lubrication requirements of bearings 6,6' (FIGS. 6-12). For higher speeds, two vanes 17 could be sufficient, while eight or more such vanes can be used for lower speeds.

Because the shaft's speed is the most important factor, for very high speeds pumper element P can be even reduced to an annular disc 43 (FIGS. 9-10) having an outwardly flared cross-section. Pumper element P can also have a hub 16' (FIGS. 11-12) carrying a clip 12 filled with bristles 8 forming an annular brush 43'.

Each vane 17 has an outwardly-flared end 18 (FIGS. 6-7) having a peripheral arcuate rim 19 and opposite sides 20 and 21. Each pair of consecutive vanes 17 defines a pocket 22 therebetween.

Preferably an off-center, circumferential expander channel 24 (FIGS. 2-5), which extends into wall 23 (FIG. 3) of bore 3, is operatively associated with pumper element P. Channel 24 originates at a point 25 (FIG. 4) and gradually shifts circumferentially off-center over an arcuate extent, say 180°. The discharge outlet 26 from expander 24 is coupled to and smoothly merges with an oil return passage 32.

One end 28 (FIG. 1) of main bore 3 accepts a torque nut 29 for adjusting the axial pressure against bearing 6' as rollers 7 wear. Bore 3 is effectively sealed against the environment by double-lip seals 30,31.

Inside casing 2 is formed an oil reservoir 35 (FIGS. 1-2) containing a filter element 36. The oil in reservoir 35 is cooled by outside fins 41. Oil can be added through a fill plug 39. A drain plug 40 carries a magnet 42 for attracting most metal wear particles flowing through filter 36.

Oil flows from return passage 32 through a guide generally designated as 34, having four inwardly tapering passages 34' that direct the returning oil into filter element 36 through a tube 44.

Clean oil in reservoir 35 must have a sufficient volume to meet the lubrication needs of system 1. This volume is inversely proportional to the shaft's speed. Either too much or not enough oil in reservoir 35 may result in a shortened bearing life.

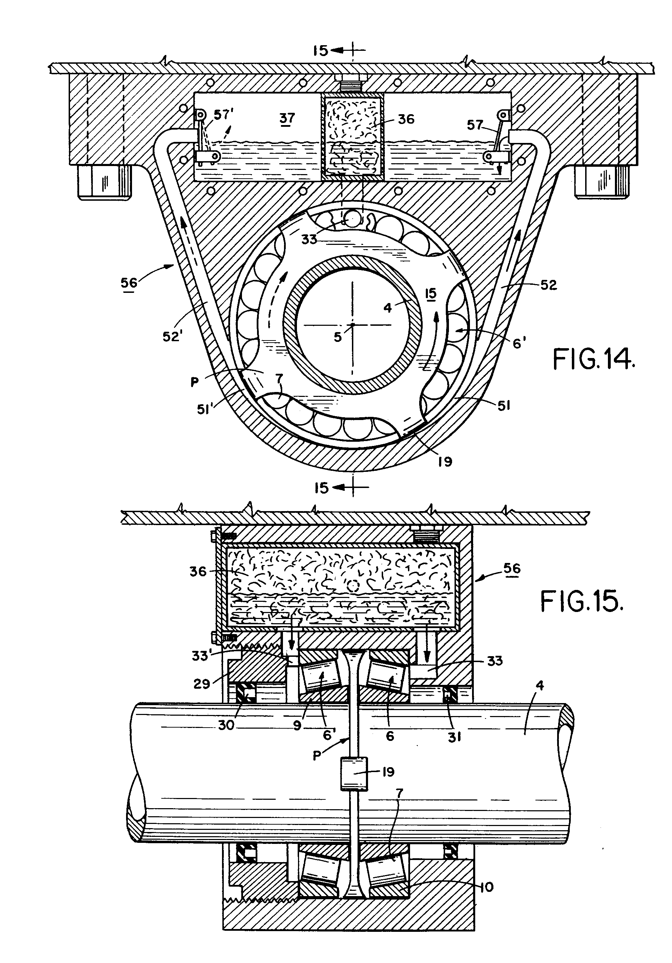

The direction of rotation of pumper element P and of the oil flow are indicated in the drawings by the solid arrows. The dotted arrows assume a reversal of rotation and oil flow (FIGS. 13-14).

In operation of system 1 described so far, the filtered and cooled oil flows out by gravity from reservoir 35 through outlet passages 33,33' into inlet ports 38,38' of casing 2, respectively (FIG. 1). The oil collects at the bottom of well 13 (FIG. 2) and around the lowermost rollers 7 until the oil levels in well 13 and in reservoir 35 equalize.

In each embodiment of pumper element P, its outer periphery rotates opposite to expander channel 24.

The oil in well 13 starts to rotate under the influence of pumper element P. The pressure starts rising when the oil is forced to enter into the reduced area 25 of off-center expander 24. Each vane 17 centrifugally injects a portion of the oil from well 13 into expander channel 24, while some of the rotating oil is trapped within pockets 22. The oil acquires kinetic energy within expander channel 24 from which it flows out through discharge outlet 26 into return passage 32. When shaft 4 reaches a constant speed, oil is also fed at a constant rate into well 13.

The velocity of the oil at discharge outlet 26 must be sufficiently high so as to maintain an adequate oil flow in a generally axial direction across rollers 7 (FIG. 1) and, in so doing, cleansing, cooling and lubricating the bearings 6 and 6'.

The velocity of the oil flowing through off-center expander 24 varies depending on the size and shape of vanes 17, on the arcuate length and eccentricity of expander channel 24, on the speed of shaft 4, and on the dimensions in and around discharge outlet 26. Accordingly, the velocity of the oil in expander 24 can be controlled by (1) changing the eccentricity of expander 24, (2) by modifying the design of vanes 17, (3) by altering the critical dimensions in and around outlet 26, and/or by changing the spacing between the peripheral edge of pumper element P and wall 23 of bore 3. Interchangeable pumper elements P can be provided having different geometrical configurations. They can be conveniently used to vary in the field the rate of oil flow in expander channel 24, which is an important advantage of the novel lubricating system 1.

As thus far described, shaft 4 was assumed to rotate in a single direction, say counterclockwise.

In FIG. 13 is shown a bi-directional system 50 having a pair of oppositely-directed, eccentric expander channels 51,51' that feed pressurized oil into return passages 52,52', through uni-directional check valves 53,53', respectively, and through a cross-linking channel 54. Expanders 51,51' are identical and of equal angular length. Preferably, each expander channel has an angular range between 90° and 180°.

When shaft 4 rotates counterclockwise, oil pressure in passage 52 opens valve 53, while valve 53' remains closed. Oil returns to reservoir 35 only through expander 51. Conversely, when shaft 4 rotates clockwise, oil pressure in passage 52' opens valve 53', while valve 53 remains closed. Oil returns to reservoir 35 only through expander 51' and through channel 54.

An important and surprising advantage of system 1, 50 is that it will continue to operate properly even when casing 2 is rotated 90° (not shown) from its position shown in FIGS. 2 and 13 so that shaft 4 will be supported by bearings 6,6' for rotation in a vertical direction.

In FIGS. 14-15 is shown another bi-directional lubricating system 56 also having a pair of oppositely directed expander channels 51,51' that feed oil into return passages 52,52', which are controlled by normally-closed, hinged, flappy door valves 57,57', respectively. When shaft 4 rotates counterclockwise, oil pressure in passage 52 opens valve 57 and closes valve 57'. Oil returns to reservoir 37 only from and through expander channel 51 and valve 57. Conversely, when shaft 4 rotates clockwise, oil pressure in passage 52' opens valve 57' and closes valve 57. Oil returns to reservoir 37 only from and through expander channel 51' and valve 57'.

In FIG. 14 reservoir 37 is above bore 3 so that oil from reservoir 37 can flow by gravity into well 13 from which it is sucked out by the rotating pumper element P.

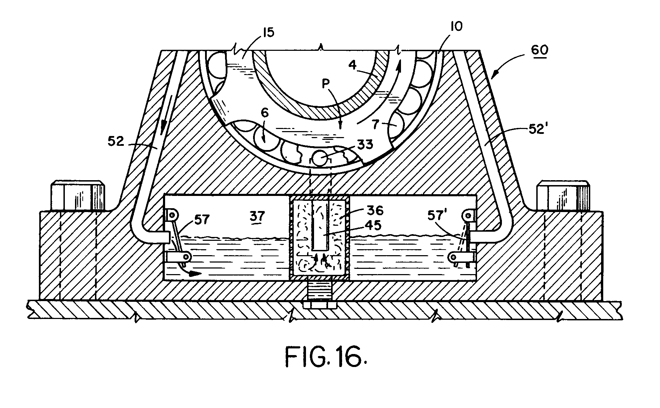

FIG. 16 shows another bi-directional lubricating system 60, similar to system 56, having a pair of return passages 52, 52' which are controlled by flappy door valves 57,57', respectively.

When shaft 4 rotates counterclockwise, oil pressure in passages 52 will open valve 57 and close valve 57'. In this manner, oil will return to reservoir 37 only from and through passage 52 and valve 57. Conversely, when shaft 4 rotates clockwise, oil pressure in passage 52' will open valve 57' and close valve 57. In this manner, oil will return to reservoir 37 only from and through passage 52 and valve 57. The oil flow across bearings 6,6' is by suction through tubes 45 positioned between the bottom of filter 36 and the rear sides of bearings 6,6'.

Because shaft 4 is above reservoir 37, oil in passages 52,52' should reach a level sufficient to barely cover the lowermost rollers 7 when shaft 4 is not rotating. Upon rotation of shaft 4, oil quickly fills up well 13 by suction. Thereafter, normal oil circulation takes place, and the oil level in reservoir 37 drops to a level as shown in FIG. 16.

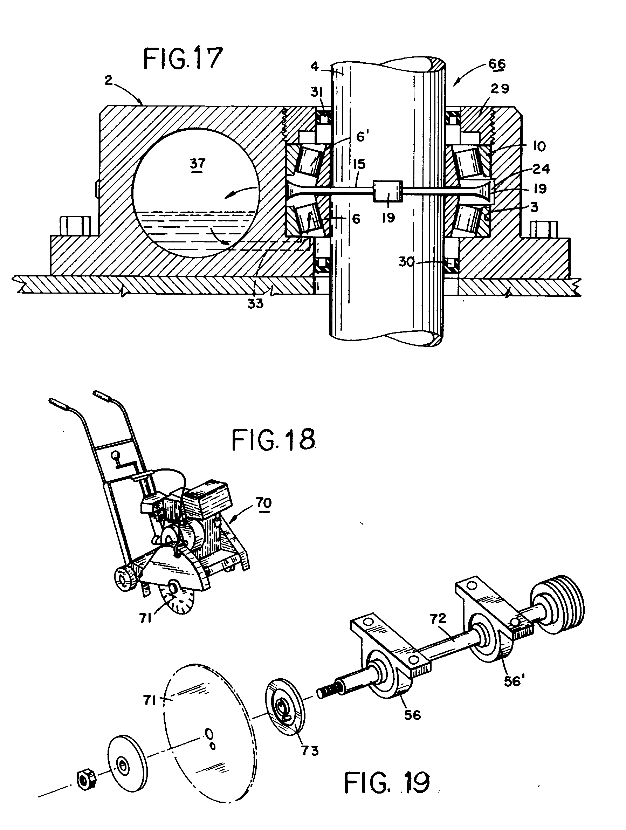

All prior embodiments assumed a horizontal shaft, in system 66 (FIG. 17) bearings 6,6' are shown to support a vertical shaft 4, and reservoir 37 is situated such as to wet rollers 7 of bearing 6 but not rollers 7 of bearing 6'. As shaft 4 starts to rotate, oil from reservoir 37 is sucked into expander 24 and then oil circulation can take place across bearings 6 and 6'. In all other material respects, system 66 operates as the previously described lubricating systems.

In FIGS. 18 and 19 is shown a conventional concrete cutting saw 70. Its diamond blade 71 receives cooling water (not shown) on the opposite sides thereof within a very dirty and corrosive surrounding environment. A collar 73 mounts blade 71 on arbor shaft 72 supported by bearing systems 56,56' the type shown in FIGS. 14-15. Bearing systems 56,56' are required to rotate at variable high speeds in both angular directions. Blade 71 must be kept at peak performance to ensure dynamic balance. Its linear speed must not exceed about 3,000 meters/minute, otherwise water will be centrifugally removed from its surfaces.

Such a concrete cutting saw 70 now uses grease and requires daily bearing lubrication, otherwise moisture and debris will set in over night causing rust spots and damage to such bearings. The bearings' single lip seals (not shown) must open to allow for the dirty grease to discharge. As a result, foreign matter and water become inevitably sucked into the bearings.

The novel lubricating systems of the invention allow the user to periodically schedule service for bearing systems 56,56'. Because double-lip seals 30,31 (FIG. 15) are not required to open, no dirt and no moisture will be drawn into the bearings, which will therefore last longer.

It will be appreciated that the self-lubricating bearing systems of the invention are simple in construction and economical to manufacture. A film of clean oil is continuously maintained on rollers 7, moisture and foreign matter are prevented from being sucked into the bearings, heat is removed continuously from the oil, and friction is kept to a minimum between the bearing surfaces, thereby increasing their operational life.

## Claims

1. A liquid self-lubricating bearing system (1) comprising at least one bearing (6) that supports a rotatable shaft (4), a casing (2) having a bore (3) for receiving said shaft and said bearing, said bearing having an inner race (9) which rotates with said shaft, an outer race (10), which is stationary in said bore, and bearing elements (7) between said races, and a pair of end seals (30, 31) for sealing off said bore from the ambient, said bearing having a liquid lubricant inlet side and a liquid lubricant outlet side, there being a pumper element (P) mounted for rotation with said shaft in said bore on said outlet side of said bearing (6) wherein said bore has an inner wall (23) forming at least one arcuate chamber (24), which surrounds the outer periphery of said pumper element (P) with a defined clearance, said chamber (24) having at least one discharge outlet (26), wherein said system has a return passage (32) comprising a reservoir (35) between said discharge outlet (26) and said inlet side of said bearing (6),
characterised in that
(a) said return passage (32) is formed within said casing and said chamber is a pumping chamber,
(b) said reservoir is adjacent to said bearing within said casing so as to allow lubricant to freely flow by gravity from said reservoir into said pumping chamber (24) through said inlet side of said bearing,
(c) said pumper element (P) has peripheral tangential surface means positioned opposite to and forming with said inner wall (23) of said pumping chamber (24) said clearance, to thereby raise the pressure of said circulating lubricant,
(d) said pumper element (P) has an overall diameter corresponding substantially to the outside diameter of said outer race (10).

2. A lubricating system according to claim 1, characterized in that said inner wall (23) forms a pair of opposed arcuate pumping chambers (51,51'), said pumper element (P) is concentrically mounted on said shaft (4) within said pumping chambers (51,51'), and said pumper element (P), when rotating with said shaft (4), recirculates liquid lubricant through said bearing (6) through one of said pumping chambers (51,51') depending on the direction of shaft rotation.

3. A lubricating system according to claim 1 or claim 2, characterized in that said pumper element (P) has at least two diametrically-opposed vanes (17), each consecutive pair of vanes defining a pocket (22) therebetween for accepting lubricant therein.

4. A lubricating system according to any one of claims 1 to 3, characterized in that said pumper chamber (24) gradually tapers outwardly over an arcuate extent, and said return passage (32) contains a filter element (36) for filtering said recirculating liquid lubricant.

5. A lubricating system according to any one of claims 1 to 4, characterized in that said shaft (4) is rotatable substantially about a horizontal or a vertical axis, and a tool (71) is mounted on said shaft.

6. A lubricating system according to any one of claims 1 to 5, characterized in that said pumper element (P) is concentrically mounted on said shaft (4) within said pumping chamber (24) and in that said pumper element (P) is an annular disc (43).

7. A lubricating system according to any one of claims 1 to 6, characterized in that a pair of back-to-back bearings (6,6') are disposed inside said bore (3), said shaft (4) is journaled in said bearings, and said pumper element (P) is concentrically mounted on said shaft (4) intermediate said bearings.

8. A lubricating system according to any one of claims 1 to 7, characterized in that said pumping chamber (24) has an angular range between 90° and 180°.

## Patentansprüche

1. Selbstschmierendes Flüssiglagersystem (1) mit mindestens einem Lager (6), das eine rotierende Welle (4) trägt, einem Gehäuse (2) mit einer Bohrung (3) zur Aufnahme der Welle und des Lagers, wobei das Lager einen inneren, mit der Welle umlaufenden Laufring (9), einen stationär in der Bohrung angeordneten äußeren Laufring (10) und Lagerelemente (7) zwischen den Laufringen besitzt, einem Paar von Stirndichtungen (30, 31) zum Abdichten der Bohrung gegen die Umgebung, wobei das Lager eine Flüssigschmiermittel-Einlaßseite und ein Flüssigschmiermittel-Auslaßseite besitzt, wobei ein Pumpelement (P) drehbar mit der Welle in der Bohrung auf der Auslaßseite des Lagers (6) befestigt ist und die Bohrung eine Innenwand (23) hat, die mindestens eine gekrümmte Kammer (24) bildet, welche den äußeren Umfang des Pumpelementes (P) mit einem vorgegebenen lichten Abstand umgibt, und wobei die Kammer (24) mindestens eine Abgabeöffnung (26) besitzt, und mit einem Rückführkanal (32), der einen Speicherbehälter (35) zwischen der Abgabeöffnung (26) und der Einlaßseite des Lagers (6) bildet,
**dadurch gekennzeichnet,** daß
a) der Rückführkanal (32) innerhalb des Gehäuses ausgebildet ist und die Kammer eine Pumpkammer ist,
b) der Speicherbehälter in der Nähe des Lagers innerhalb des Gehäuses so angeordnet ist, daß Schmiermittel frei durch Schwerkraftwirkung aus dem Behälter in die Pumpkammer (24) durch die Einlaßseite des Lagers strömen kann,
c) das Pumpelement (P) periphere tangentiale Oberflächen aufweist, die entgegengesetzt zur Innenwand (23) der Pumpkammer (24) angeordnet sindund mit dieser Innenwand (23) den lichten Abstand bilden, um den Druck des zirkulierenden Schmiermittels zu erhöhen,
d) das Pumpelement (P) einen Gesamtdurchmesser entsprechend etwa dem Außendurchmesser des äußeren Laufringes (10) hat.

2. Schmiermittelsystem nach Anspruch 1, dadurch gekennzeichnet, daß die Innenwand (23) ein Paar entgegengesetzter gekrümmter Pumpkammern (51, 51') bildet, das Pumpelement (P) konzentrisch auf der Welle (4) innerhalb der Pumpkammern (51, 51') befestigt ist, und das Pumpelement (P) bei seiner Drehung mit der Welle (4) Flüssigschmiermittel durch das Lager (6) hindurch und durch eine der Pumpkammern (51, 51'), je nach der Richtung der Wellendrehung, in Umlauf setzt.

3. Schmiermittelsystem nach Anspruch 1 oder 2, dadurch gekennzeichnet, daß das Pumpelement (P) mindestens zwei diametral gegenüberliegende Schaufeln (17) aufweist, wobei jedes aufeinanderfolgende Paar von Schaufeln eine Tasche (22) dazwischen für die Aufnahme von Schmiermittel festlegt.

4. Schmiermittelsystem nach einem der Ansprüche 1 - 3, dadurch gekennzeichnet, daß die Pumpkammer (24) sich allmählich nach außen über einen bogenförmigen Verlauf verjüngt, und daß der Rückführkanal (32) ein Filterelement (36) zum Filtern des zirkulierenden Flüssigschmiermittels enthält.

5. Schmiermittelsystem nach einem der Ansprüche 1 - 4, dadurch gekennzeichnet, daß die Welle (4) im wesentlichen um eine horizontale oder um eine vertikale Achse drehbar angeordnet ist, und daß ein Werkzeug (71) auf der Welle befestigt ist.

6. Schmiermittelsystem nach einem der Ansprüche 1 - 5, dadurch gekennzeichnet, daß das Pumpelement (P) konzentrisch auf der Welle (4) innerhalb der Pumpkammer (24) befestigt ist, und daß das Pumpelement (P) eine ringförmige Scheibe (43) ist.

7. Schmiermittelsystem nach einem der Ansprüche 1 - 6, dadurch gekennzeichnet, daß zwei Rücken an Rücken angeordnete Lager (6, 6') innerhalb der Bohrung (3) vorgesehen sind, daß die Welle in den Lagern drehbar gelagert ist, und daß das Pumpelement (P) konzentrisch auf der Welle (4) zwischen den Lagern befestigt ist.

8. Schmiermittelsystem nach einem der Ansprüche 1 - 7, dadurch gekennzeichnet, daß die Pumpkammer (24) einen Winkelbereich zwischen 90° und 180° hat.

## Revendications

1. Dispositif de paliers autolubrifiant par fluide (1) comprenant au moins un palier ou un roulement (6) supportant un arbre tournant (4), un carter (2) ayant un alésage (3) pour la réception de cet arbre et de ce roulement, ce roulement ayant une bague ou un chemin de roulement intérieur (9) qui tourne avec l'arbre précité, une bague ou un chemin de roulent extérieur (10) qui est fixe dans l'alésage précité, et des éléments de roulement (7) entre les bagues précitées et deux joints extrêmes (30, 31) pour fermer l'alésage précité vis-à-vis du milieu ambiant, le palier précité ayant un côté d'entrée de lubrifiant liquide et un côté de sortie de lubrifiant liquide, un élément de pompage (P) étant monté pour sa rotation avec l'arbre précité dans l'alésage précité sur le côté de sortie précité du palier (6), cet alésage ayant une paroi intérieure (23) formant au moins une chambre à courbure en arc (24) qui entoure le pourtour extérieur de l'élément de pompage (P) précité avec un jeu ou intervalle défini, cette chambre (24) ayant au moins une sortie d'évacuation (26), le dispositif précité ayant un passage de retour (32) comprenant un réservoir (35) entre la sortie d'évacuation (26) précitée et le côté d'entrée précité du palier (6),
caractérisé en ce que
a) le passage de retour (32) précité est formé dans le carter précité et la chambre précitée est une chambre de pompage,
b) le réservoir précité est adjacent au palier ou au roulement précité dans le carter précité de manière à permettre au lubrifiant de s'écouler librement par gravité à partir du réservoir précité dans la chambre de pompage (24) précitée à travers le côté d'entrée précité du palier précité,
c) l'élément de pompage (P) précité comporte un moyen constitué d'une surface tangentielle périphérique disposée opposée à la paroi intérieure (23) précitée de la chambre de pompage (24) et réalisant avec cette paroi (23) le jeu précité de manière à augmenter ainsi la pression du lubrifiant circulant précité,
d) l'élément de pompage (P) précité a un diamètre total correspondant sensiblement au diamètre extérieur de la bague extérieure (10) précitée.

2. Dispositif autolubrifiant selon la revendication 1 caractérisé en ce que la paroi intérieure (23) précitée forme une paire de chambres de pompage opposées (51, 51') courbées en arc, l'élément de pompage (P) précité est monté concentriquement sur l'arbre (4) précité à l'intérieur des chambres de pompage (51, 51') précitées et cet élément de pompage (P), lorsqu'il tourne avec l'arbre (4) précité fait recirculer le lubrifiant liquide à travers le palier (6) précité par l'une des chambres de pompage (51, 51') précitées en dépendance du sens de rotation de l'arbre.

3. Dispositif autolubrifiant selon la revendication 1 ou la revendication 2 caractérisé en ce que l'élément de pompage (P) précité comporte au moins deux pales ou ailettes (17) diamétralement opposées, chacune des paires de pales consécutives définissant une poche (22) entre celles-ci pour la réception de lubrifiant.

4. Dispositif autolubrifiant selon l'une quelconque des revendications 1 à 3 caractérisé en ce que la chambre de pompage (24) précitée se réduit graduellement vers l'extérieur sur une étendue en arc et le passage de retour (32) précité contient un élément de filtration (36) pour filtrer le lubrifiant liquide de recirculation précité.

5. Dispositif autolubrifiant selon l'une quelconque des revendications 1 à 4 caractérisé en ce que l'arbre (4) précité peut tourner autour d'un axe sensiblement horizontal ou vertical et un outil (71) est monté sur cet arbre.

6. Dispositif autolubrifiant selon l'une quelconque des revendications 1 à 5 caractérisé en ce que l'élément de pompage (P) précité est monté concentriquement sur l'arbre (4) précité dans la chambre de pompage (24) précitée et l'élément de pompage (P) précité est un disque annulaire (43).

7. Dispositif autolubrifiant selon l'une quelconque des revendications 1 à 6 caractérisé en ce qu'une paire de roulements ou coussinets (6, 6') placés "dos à dos" sont disposés à l'intérieur de l'alésage (3) précité, l'arbre (4) précité est supporté dans les roulements précités et l'élément de pompage (P) précité est monté concentriquement sur l'arbre (4) précité dans une position intermédiaire entre les roulements précités.

8. Dispositif autolubrifiant selon l'une quelconque des revendications 1 à 7 caractérisé en ce que la chambre de pompage (24) précitée comporte une étendue angulaire comprise entre 90° et 180°.
